# EUROPEAN PATENT APPLICATION

(11) **EP 3 009 977 A1**
(43) Date of publication of application: **20.04.2016**
(21) Application number: 14810256.9
(22) Date of filing: 10.06.2014
(51) Int. Cl.: G06Q 30/02, G06Q 30/06

(54) **PRIVILEGE IMPARTING SYSTEM, SERVER DEVICE, AND PRIVILEGE IMPARTING METHOD**

(30) Priority: 12.06.2013 JP 2013123985
(71) Applicant: NTT Docomo, Inc., Tokyo 100-6150 (JP); Ase Co., Ltd., Tokyo 112-0004 (JP)
(72) Inventor: KIKUCHI, Daisuke, Tokyo 100-6150 (JP); ITO, Keiji, Tokyo 160-0022 (JP); UNTEN, Hitomi, Tokyo 160-0022 (JP); TAKUWA, Hiromasa, Tokyo 160-0022 (JP); UENISHI, Masutomo, Tokyo 160-0022 (JP); YAMAKAWA, Susumu, Tokyo 162-0822 (JP); NAKAGAWA, Daisuke, Tokyo 112-0004 (JP); NAKASHIMA, Toshio, Tokyo 112-0004 (JP); SATOU, Kouzou, Tokyo 112-0004 (JP); HATASHITA, Shunsuke, Tokyo 160-0022 (JP); OHARA, Aki, Tokyo 160-0022 (JP)
(74) Representative: Hoffmann Eitle
(86) International application number: PCT/JP2014/065307
(87) International publication number: WO 2014/199971

(57) **Abstract**

A benefit awarding system includes a terminal device and a server device. The terminal device includes: a first acquiring unit that acquires a product identifier for identifying a product; and a first transmitting unit that transmits a user identifier indicating a user and the product identifier acquired by the first acquiring unit, in a case where this terminal device is positioned inside a shop. The server device includes: a first receiving unit that receives the user identifier and the product identifier transmitted by the terminal device; and an update unit that updates benefit information stored in a storage unit in association with the user identifier received by the first receiving unit, with information indicating benefits corresponding to the product identifier received by the first receiving unit.

## Description

### Technical Field

The present invention relates to a technique for awarding benefits to customers.

### Background Art

Examples of techniques for awarding benefits (points or coupons) to users of mobile communication terminals, using two-dimensional code attached to products, include a system disclosed in JP 2010-250623A. According to this system, if a user of a mobile communication terminal uses a portable telephone to read two-dimensional code attached to a product and access a uniform resource locator (URL) specified by the two-dimensional code, benefits are awarded to the user.

### Summary of Invention

### Technical Problem

According to the system disclosed in Patent Document 1, two-dimensional code for awarding benefits to customers is invalidated after the benefits are awarded. Thus, for example, if a customer who does not intend to purchase a product uses a portable telephone to read two-dimensional code attached to the product placed in a shop and access a URL specified by the two-dimensional code, this two-dimensional code is invalidated. Later, even when a customer who intends to purchase this product uses a portable telephone to read the two-dimensional code attached to the product, the URL specified by the two-dimensional code has been already accessed and the two-dimensional code has been invalidated, and, thus, no benefits are awarded to the customer who intends to purchase the product.

As a method for addressing this sort of problem, a method is conceivable in which benefits are awarded to any customer who performs reading operation of two-dimensional code. However, according to this method, for example, if people other than a person who purchased and took a product home use portable telephones to read two-dimensional code attached to the product, benefits are awarded to them although they did not visit the shop. Sellers want to promote sales by awarding benefits to those who wish to purchase products such as those actually visiting the shop.

The present invention has been made in view of the above circumstances and provides a technique for awarding benefits to those visiting shops.

### Means for solving the problem

In one aspect, the present invention provides a benefit awarding system, including a terminal device and a server device, the terminal device including: a first acquiring unit that acquires a product identifier for identifying a product; and a first transmitting unit that transmits a user identifier indicating a user and the product identifier acquired by the first acquiring unit, in a case where this terminal device is positioned inside a shop; and the server device including: a first receiving unit that receives the user identifier and the product identifier transmitted by the terminal device; and an update unit that updates benefit information stored in a storage unit in association with the user identifier received by the first receiving unit, with information indicating benefits corresponding to the product identifier received by the first receiving unit.

In the invention, a configuration may be adopted in which the terminal device includes: a second acquiring unit that acquires a transmitter identifier output from a transmitter disposed in a shop; a second transmitting unit that transmits the transmitter identifier acquired by the second acquiring unit; a second receiving unit that receives a first response transmitted from a device that received the transmitter identifier transmitted by the second transmitting unit; and a determining unit that determines that this terminal device is positioned inside a shop, in a case where the second receiving unit receives the first response; and the server device includes: a third receiving unit that receives the transmitter identifier transmitted by the terminal device; and a third transmitting unit that transmits the first response to the terminal device, in a case where the transmitter identifier received by the third receiving unit is stored in the storage unit.

In the invention, a configuration may be adopted in which the transmitter outputs acoustic waves indicating the transmitter identifier, and the second acquiring unit analyzes the acoustic waves, thereby acquiring the transmitter identifier.

In the invention, a configuration may be adopted in which, in a case where this terminal device is not positioned inside a shop, the first transmitting unit does not transmit the user identifier and the product identifier.

In the invention, a configuration may be adopted in which, in a case where this terminal device is not positioned inside a shop, the terminal device displays information prompting a visit when the first acquiring unit acquires the product identifier.

In another aspect, the invention provides a server device, including: a receiving unit that receives a user identifier indicating a user and a product identifier for identifying a product, the identifiers being transmitted when a terminal device is positioned inside a shop; and an update unit that updates benefit information stored in a storage unit in association with the user identifier received by the receiving unit, with information indicating benefits corresponding to the product identifier received by the receiving unit.

In another aspect, the invention provides a benefit awarding method, including: acquiring, using a terminal device, a product identifier for identifying a product; transmitting, using the terminal device, a user identifier indicating a user and the acquired product identifier, in a case where this terminal device is positioned inside a shop; receiving, using a server device, the user identifier and the product identifier transmitted from the terminal device; and updating, using the server device, benefit information stored in a storage unit in association with the received user identifier, with information indicating benefits corresponding to the received product identifier.

### Effects of Invention

The present invention makes it possible to award benefits to those visiting shops.

### Brief Description of Drawings

FIG. 1 is a diagram showing an apparatus forming point system 1 according to an embodiment of the present invention.
FIG. 2 is a diagram showing signals output by transmitter 30.
FIG. 3 is a block diagram showing the hardware configuration of terminal device 10.
FIG. 4 is a block diagram showing the functional configuration of terminal device 10.
FIG. 5 is a block diagram showing the hardware configuration of server device 20.
FIG. 6 is a table showing an example of shop table TB1.
FIG. 7 is a table showing an example of point table TB2.
FIG. 8 is a table showing an example of user table TB3.
FIG. 9 is a block diagram showing the functional configuration of server device 20.
FIG. 10 is a flowchart showing the flow of processing performed by terminal device 10.
FIG. 11 is a flowchart showing the flow of processing performed by server device 20.
FIG. 12 is a flowchart showing the flow of processing performed by terminal device 10.
FIG. 13 is a flowchart showing the flow of processing performed by server device 20.

### Reference Numerals

- 1: Point system
- 2: Communication network
- 3: Shop
- 10, 10A, 10B: Terminal device
- 20: Server device
- 30: Transmitter
- 40: Cash register
- 101: Control unit
- 102: Storage unit
- 103: Display unit
- 104: Input unit
- 105: Communicating unit
- 106: Reading unit
- 107: Audio processing unit
- 108: Near field communicating unit
- 201: Control unit
- 202: Storage unit
- 203: Display unit
- 204: Input unit
- 205: Communicating unit
- 1001: First acquiring unit
- 1002: First transmitting unit
- 1003: Second acquiring unit
- 1004: Second transmitting unit
- 1005: Second receiving unit
- 1006: Determining unit
- 2001: First receiving unit
- 2002: Update unit
- 2003: Third receiving unit
- 2004: Third transmitting unit

### Description of Embodiments

### Embodiment

### Overall Configuration

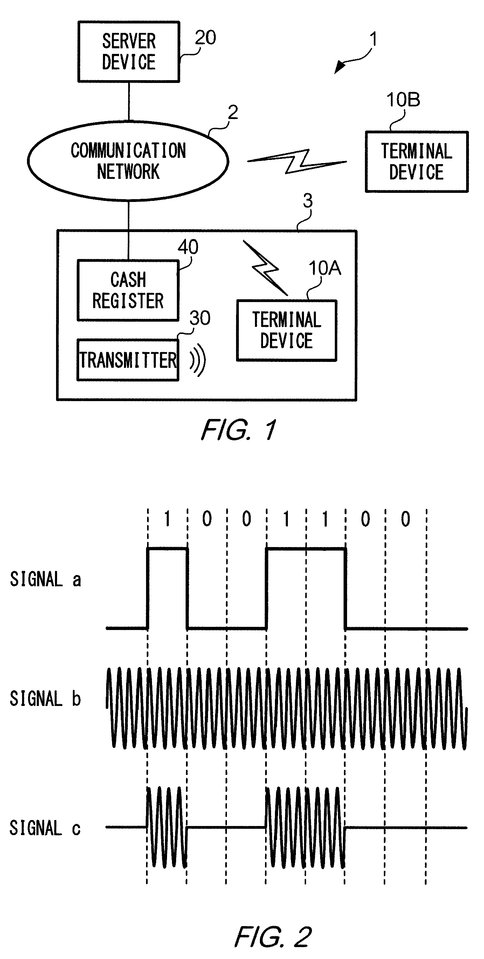

FIG. 1 is a diagram showing an apparatus forming point system 1, which is an example of a benefit awarding system according to an embodiment of the present invention. Communication network 2 is a mobile communication network that provides communication services such as voice communication or data communication. Note that communication network 2 may include the Internet, a fixed telephone network, and the like. Server device 20, cash register 40, and terminal devices 10A and 10B perform data communication via communication network 2.

In this embodiment, terminal devices 10A and 10B are smartphones that perform voice communication or data communication via communication network 2. Although terminal devices 10A and 10B are smartphones in this embodiment, there is no limitation to this, and examples thereof may include a tablet personal computer (PC), a feature phone, a personal digital assistant (PDA), and the like, as long as communication can be performed via communication network 2.

In this embodiment, terminal devices 10A and 10B have the same configuration, and, thus, they are denoted by terminal devices 10 if they do not have to be distinguished from each other.

Point system 1 is a system that provides loyalty programs to those visiting shop 3. In shop 3, multiple products are displayed, and the displayed products are provided with bar code indicating the products. Point system 1 has server device 20, transmitter 30, and cash register 40 for a point of sale (POS) system. If a user of terminal device 10 visiting shop 3 uses terminal device 10 to read bar code attached to a product displayed in the shop, point system 1 gives points, which are an example of benefits, to the user of terminal device 10. Cash register 40 is an electronic cash register for a POS system, and has a function of reading bar code attached to a product and displaying a price of the product and a function of performing communication following the international standard for radio communications known as near field communication (NFC). Although there are multiple shops 3 having transmitters 30, FIG. 1 shows only one shop 3 and only one transmitter 30 in order to avoid complications of the drawing.

Server device 20 is a device that manages points given to the users of terminal devices 10. Server device 20 manages, for each user, points given to the users of terminal devices 10.

Transmitter 30 is a device installed in shop 3, and outputs a signal indicating a transmitter identifier for uniquely identifying transmitter 30. In this embodiment, transmitter 30 outputs a signal indicating a transmitter identifier, using acoustic waves at a predetermined frequency.

Hereinafter, signals output by transmitter 30 will be described with reference to FIG. 2. Transmitter 30 stores a transmitter identifier in binary form, and generates signal *a* indicating the stored transmitter identifier at predetermined intervals. For example, if a shop has transmitter 30 with the transmitter identifier being "1001100", signal *a* is at a low (L) level for the digit "0" of the transmitter identifier, and is at a high (H) level for the digit "1" of the transmitter identifier as shown in FIG. 2. In this embodiment, a period during which signal *a* is at the H level for one digit of the transmitter identifier and a period during which signal *a* is at the L level for the same have predetermined lengths, which are the same length.

Moreover, transmitter 30 generates sine wave signal *b* at a predetermined frequency shown in FIG. 2, and further generates signal c by modulating signal *b* with signal *a*. As shown in FIG. 2, signal c has an amplitude of 0 in the periods during which signal *a* is at the L level, and has the same waveform as that of signal *b* in the periods during which signal *a* is at the H level. In this embodiment, signal *b* has a frequency in a ultrasonic wave band, but may have a frequency in a acoustic wave band in the audible frequency range.

### Configuration of Terminal Device 10

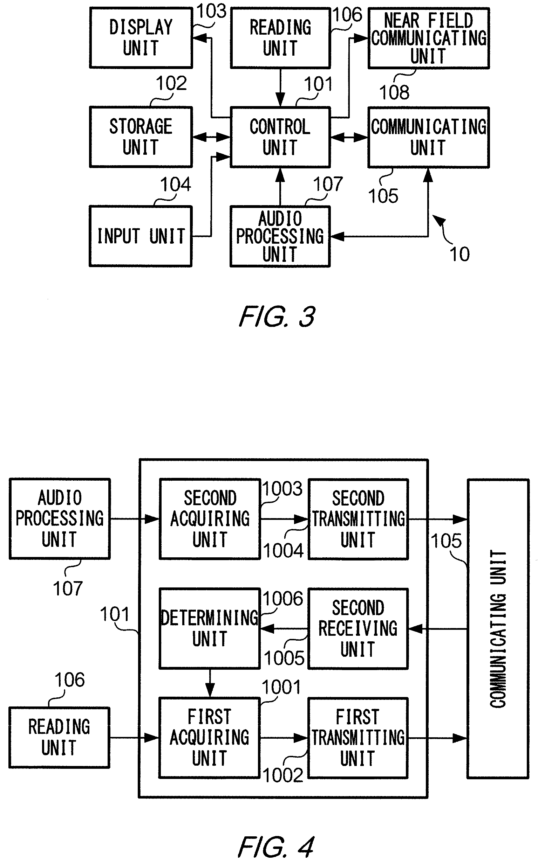

FIG. 3 is a block diagram showing an exemplary hardware configuration of terminal device 10. Control unit 101 is a microcontroller including a central processing unit (CPU), a read only memory (ROM), and a random access memory (RAM). When the CPU executes a program stored in the ROM, the basic functions of the smartphone are realized.

Display unit 103 includes a liquid crystal display, and displays screens and various messages for operating terminal device 10. Input unit 104 includes multiple keys for operating terminal device 10. Input unit 104 further includes a touch panel provided on the surface of display unit 103, the touch panel being a panel through which images displayed by display unit 103 are shown and positions touched by a finger are detected. Communicating unit 105 functions as a communication interface for performing communication via communication network 2, and receives and transmits various types of information. Reading unit 106 includes a camera module having a lens and an image sensor. Reading unit 106 converts an image of a subject formed on the image sensor into an electrical signal, and outputs data indicating the image of the subject to control unit 101. Near field communicating unit 108 is a communication interface for performing communication following the international standard for radio communications, known as NFC.

Audio processing unit 107 has a microphone and a loudspeaker. In the case where a voice call is made between terminal devices 10, when a digital signal representing voice of the intended party is supplied from communicating unit 105, audio processing unit 107 converts the supplied digital signal into an analog signal. The analog signal is supplied to the loudspeaker, and the voice of the intended party is output as sound from the loudspeaker. Furthermore, when acoustic waves are input to the microphone, audio processing unit 107 converts the input acoustic waves into a digital signal. In the case where a voice call is made between terminal devices 10, audio processing unit 107 supplies a digital signal obtained by converting voice of the user to communicating unit 105. The digital signal is transmitted from communicating unit 105 to communication network 2, and is further transmitted to terminal device 10 of the intended party. Furthermore, if an application program (described later) is executed, audio processing unit 107 converts the input acoustic waves into a digital signal, and supplies the digital signal to control unit 101.

Storage unit 102 is a non-volatile memory, and stores various application programs. In this embodiment, storage unit 102 stores an application program (hereinafter, referred to as app A) for realizing a function of providing point program service to the user of terminal device 10. Furthermore, storage unit 102 stores a user identifier for identifying the user of app A. When the CPU of control unit 101 executes app A stored in storage unit 102, a function of providing point program service is realized.

FIG. 4 is a block diagram showing the configuration of functions characteristic to the present invention, among the functions realized by control unit 101 executing app A. First acquiring unit 1001 is configured to analyze a bar code image acquired by reading unit 106, thereby acquiring JAN code, which is an example of a product identifier for identifying a product. First transmitting unit 1002 is configured to control communicating unit 105, thereby transmitting the JAN code acquired by first acquiring unit 1001 and the user identifier stored in storage unit 102 to server device 20. Second acquiring unit 1003 is configured to analyze the digital signal output by audio processing unit 107, thereby extracting signal c, and demodulating extracted signal c, thereby acquiring the transmitter identifier. Second transmitting unit 1004 is configured to controlcommunicating unit 105, thereby transmitting the transmitter identifier acquired by second acquiring unit 1003 to server device 20. Second receiving unit 1005 is configured to receive a response transmitted from server device 20 according to the transmitter identifier transmitted by terminal device 10. Determining unit 1006 is configured to determine whether or not terminal device 10 is positioned inside shop 3 according to the response acquired by second receiving unit 1005.

### Configuration of Server Device 20

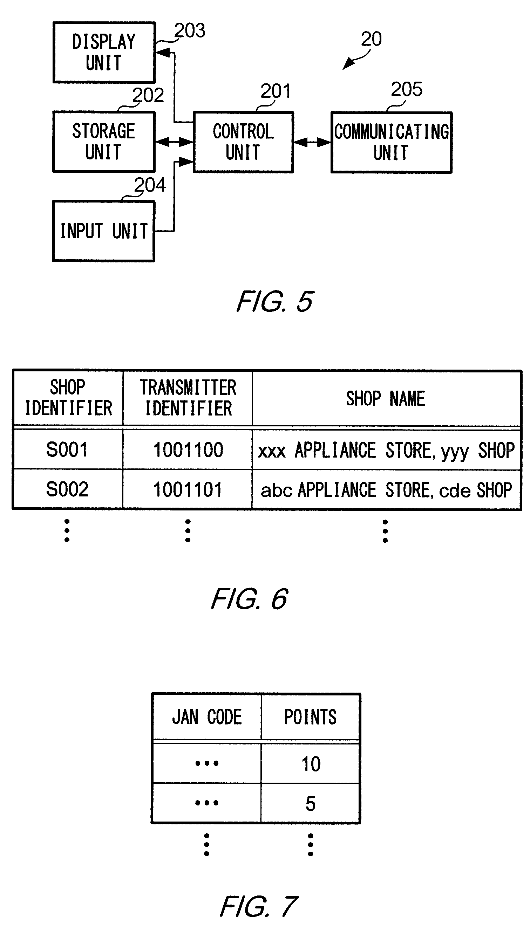

FIG. 5 is a block diagram showing an exemplary hardware configuration of server device 20. Display unit 203 includes a liquid crystal display, and displays screens for operating server device 20, information stored in storage unit 202, and the like. Input unit 204 includes a keyboard or a mouse, and server device 20 operates in response to the operation performed with the keyboard or the mouse. Communicating unit 205 functions as a communication interface for performing communication via communication network 2. Communicating unit 205 exchanges information via communication network 2 with terminal device 10 and cash register 40. In this embodiment, server device 20 includes display unit 203 and input unit 204, but may have a configuration without display unit 203 or input unit 204.

Storage unit 202 has a hard disk drive, and stores a program for realizing a function of providing point program service to those visiting shop 3. Furthermore, storage unit 202 stores shop table TB1, point table TB2, and user table TB3.

Shop table TB1 is a table that stores the transmitter identifiers represented by the signals output by transmitters 30. As shown in FIG. 6, shop table TB1 stores, in association with a shop name, a shop identifier for identifying a shop with that shop name, and a transmitter identifier represented by the signal output by transmitter 30 disposed in the shop with that shop name.

As shown in FIG. 7, point table TB2 is a table that stores Japanese article number (JAN) code indicated by bar code of a product displayed in shop 3, and points that are to be given to users who use terminal devices 10 to read the bar code of the JAN code, in association with each other.

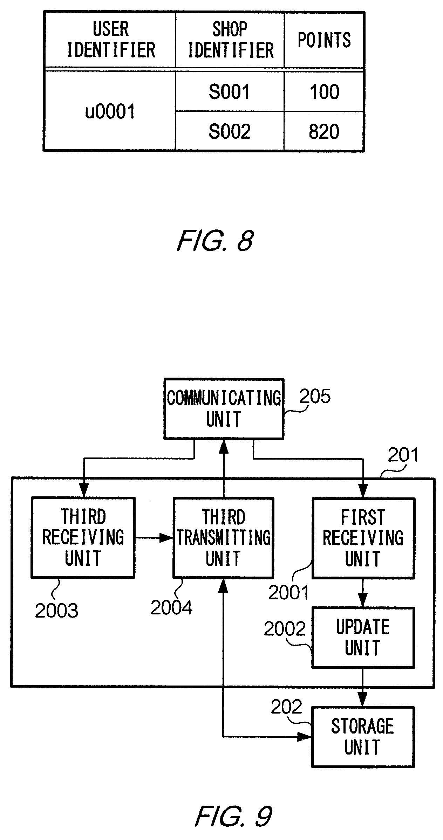

User table TB3 is a table that stores information of a user who uses app A described above. User table TB3 is generated for each user when the user performs a registration operation to the point program service using terminal device 10 executing app A. User table TB3 stores a user identifier for identifying the user of app A. As shown in FIG. 8, user table TB3 further stores a shop identifier for identifying a shop visited by the user, and points acquired by the user at that shop, in association with each other. For example, if a user with the user identifier being "u0001" acquires 100 points at a shop with the shop identifier being "S001" and acquires 820 points at a shop with the shop identifier being "S002", user table TB3 of this user is as shown in FIG. 8.

Control unit 201 includes a CPU, a ROM, and a RAM. When the program stored in storage unit 202 is executed by control unit 201, a function of providing point program service is realized to those visiting shop 3.

FIG. 9 is a block diagram showing the configuration of functions according to the present invention, among the functions realized by server device 20. First receiving unit 2001 is configured to operate in cooperation with communicating unit 205, thereby receiving the user identifier and the JAN code transmitted by terminal device 10. Update unit 2002 is configured to update point information stored in storage unit 202 in association with the user identifier received by first receiving unit 2001, with the points corresponding to the JAN code received by first receiving unit 2001. Third receiving unit 2003 is configured to operate in cooperation with communicating unit 205, thereby receiving the transmitter identifier transmitted by terminal device 10. Third transmitting unit 2004 is configured to, if the transmitter identifier received by third receiving unit 2003 is stored in shop table TB1, controlling communicating unit 205, thereby transmitting a first message indicating that the transmitter identifier has been registered.

### Operation Example in Embodiment

Next, an operation example in this embodiment will be described. Before entering shop 3, the user of terminal device 10A performs an operation to give an instruction to start app A described above, using input unit 104. In response to the operation of the user, control unit 101 executes app A. Upon executing app A, control unit 101 initializes an in-shop flag indicating whether or not the user is positioned inside shop 3, to "0". Note that the in-shop flag indicates that the user is positioned outside shop 3 if the value is 0, and indicates that the user is positioned inside shop 3 if the value is 1. In audio processing unit 107, acoustic waves acquired by the microphone are converted into a digital signal, and the digital signal is supplied to control unit 101.

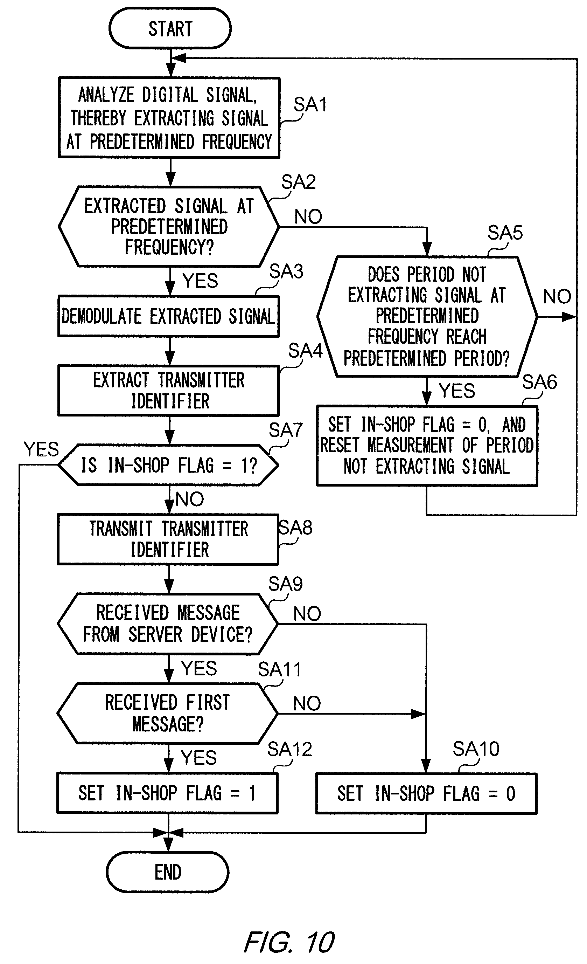

When the digital signal is supplied, control unit 101 performs the processing shown in FIG. 10. First, control unit 101 analyzes the supplied digital signal, thereby extracting a signal at the predetermined frequency (frequency of signal *b*) (step SA1). If a signal at the predetermined frequency is extracted (YES in step SA2), control unit 101 demodulates the extracted signal (step SA3).

For example, if terminal device 10A is positioned outside shop 3, signal c output by transmitter 30 does not reach the microphone of audio processing unit 107. Thus, even when acoustic waves acquired by the microphone are converted into a digital signal, the signal at the frequency of signal *b* output by transmitter 30 is not obtained. In this case, the determination by control unit 101 in step SA2 is NO. Control unit 101 measures the length of the period during which the signal at the predetermined frequency is not extracted, and determines whether or not this length of the period reaches a predetermined period of time (step SA5). If the determination by control unit 101 in step SA5 is NO, the processing flow returns to step SA1. If the determination by control unit 101 in step SA5 is YES, the value of the in-shop flag is set to 0, the measurement of the length of the period during which the signal is not extracted is reset (step SA6), and the processing flow returns to step SA1.

On the other hand, when the user of terminal device 10A enters shop 3 while bringing terminal device 10A with him/her, signal c output by transmitter 30 is acquired by the microphone of audio processing unit 107. Audio processing unit 107 converts signal c acquired by the microphone into a digital signal, and supplies the digital signal to control unit 101. Control unit 101 analyzes the supplied digital signal, thereby extracting signal *c* output by transmitter 30. Control unit 101 demodulates signal c, thereby acquiring signal *a* indicating the transmitter identifier.

Control unit 101 analyzes the H level and the L level of signal *a*, thereby extracting the transmitter identifier from signal *a* (step SA4). For example, if signal *a* has the waveform shown in FIG. 2, control unit 101 extracts the transmitter identifier "1001100". Upon extracting the transmitter identifier, control unit 101 determines the value of the in-shop flag. If the value of the in-shop flag is "1" (YES in step SA7), control unit 101 ends the processing shown in FIG. 10. If the value of the in-shop flag is "0", control unit 101 controls communicating unit 105, thereby transmitting the extracted transmitter identifier to server device 20 (step SA8).

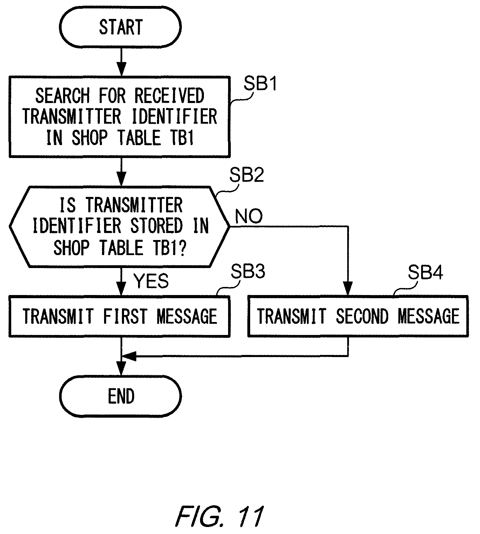

On server device 20 side, if communicating unit 205 receives the transmitter identifier transmitted from terminal device 10A, control unit 201 performs the processing shown in FIG. 11. First, control unit 201 searches for the received transmitter identifier in shop table TB1 (step SB1). If the received transmitter identifier is stored in shop table TB1 (YES in step SB2), control unit 201 controls communicating unit 205, thereby transmitting a first message indicating that the transmitter identifier has been registered, to terminal device 10A from which the transmitter identifier was transmitted (step SB3). If the received transmitter identifier is not stored in shop table TB1 (NO in step SB2), control unit 201 controls communicating unit 205, thereby transmitting a second message indicating that the transmitter identifier has not been registered, to terminal device 10A from which the transmitter identifier was transmitted (step SB4).

Control unit 101 from which the transmitter identifier was transmitted waits for a response from server device 20, for a predetermined period of time. On terminal device 10A side, if the message transmitted from server device 20 is received by communicating unit 105, the received message is supplied to control unit 101. If the message transmitted from server device 20 is not received within the predetermined period of time (NO in step SA9), control unit 101 sets the value of the in-shop flag to 0 (step SA10). If the message transmitted from server device 20 is received (YES in step SA9) and the received message is the first message (YES in step SA11), control unit 101 sets the value of the in-shop flag to 1 (step SA12). If the received message is the second message (NO in step SA11), control unit 101 sets the value of the in-shop flag to 0 (step SA10).

After entering shop 3, if the user of terminal device 10A wants to acquire points according to the point program service, the user operates terminal device 10A, thereby using terminal device 10A to read bar code attached to a product displayed in the shop. Upon reading the bar code using reading unit 106, terminal device 10A supplies data of the bar code image to control unit 101.

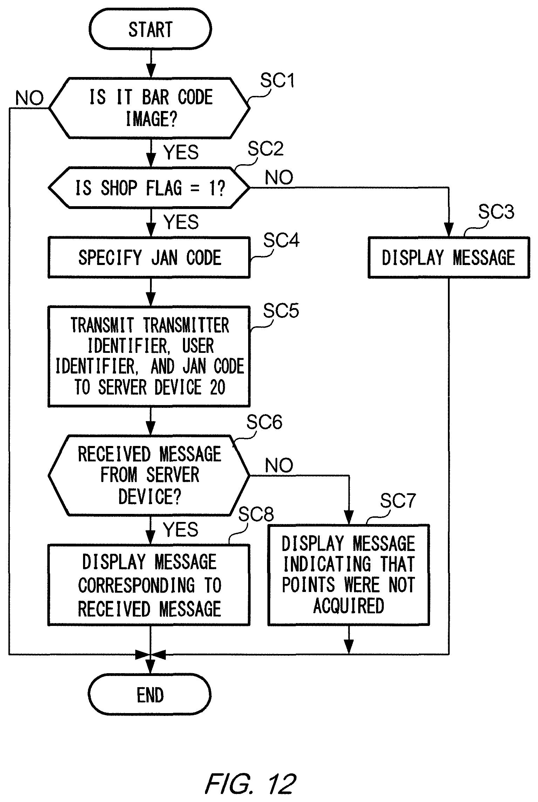

Control unit 101 that acquired the data performs the processing shown in FIG. 12. First, control unit 101 determines whether or not the image indicated by the acquired data is a bar code image. If the image indicated by the acquired data is not a bar code image (NO in step SC1), control unit 101 ends the processing shown in FIG. 12. If the image indicated by the acquired data is a bar code image (YES in step SC1), control unit 101 then determines the value of the in-shop flag. If the value of the in-shop flag is 0 (NO in step SC2), that is, if terminal device 10A is not positioned inside the shop, control unit 101 controls display unit 103, thereby displaying a message (step SC3). In this case, display unit 103 displays a message indicating that no points can be acquired outside the shop.

If the value of the shop flag is 1 (YES in step SC2), that is, if terminal device 10A is positioned inside the shop, control unit 101 analyzes the bar code image indicated by the acquired data, thereby specifying JAN code indicated by the bar code (step SC4). Control unit 101 controls communicating unit 105, thereby transmitting the transmitter identifier, the specified JAN code, and the user identifier stored in storage unit 102, to server device 20 (step SC5).

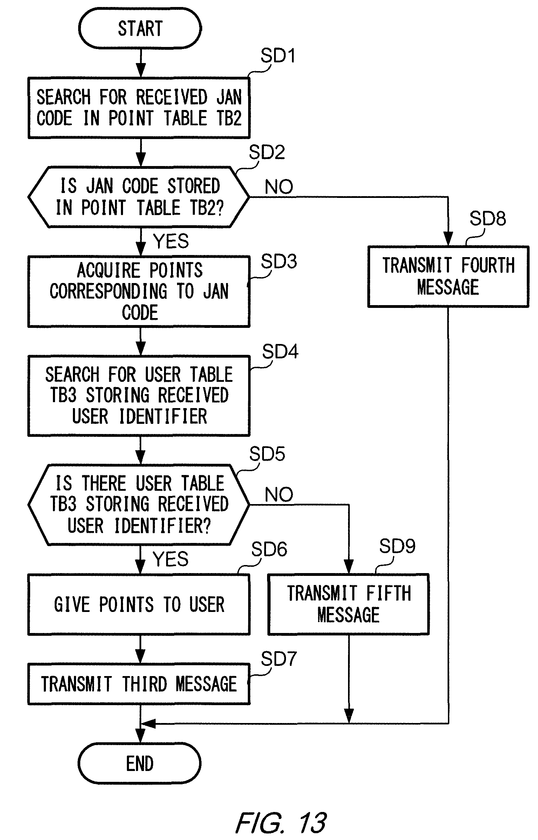

On server device 20 side, if communicating unit 205 receives the JAN code and the user identifier transmitted from terminal device 10A, control unit 201 performs the processing shown in FIG. 13. First, control unit 201 searches for the received JAN code in point table TB2 (step SD1). If the received JAN code is stored in point table TB2 (YES in step SD2), control unit 201 searches for user table TB3 storing the user identifier received together with the JAN code (step SD4).

If there is user table TB3 storing the received user identifier in storage unit 202 (YES in step SD5), control unit 201 performs processing that gives points to the user (step SD6). Specifically, in shop table TB1, control unit 201 specifies the row storing the received transmitter identifier, and extracts the shop identifier stored in the specified row. Next, in user table TB3 storing the received user identifier, control unit 101 specifies the row storing the extracted shop identifier, and adds the points acquired in step SD3 to the points stored in association with the specified row. If the specified shop identifier is not stored in user table TB3 storing the received user identifier, control unit 201 newly generates a row storing the specified shop identifier, in user table TB3, and stores the points acquired in step SD3 in the generated row. When the processing in step SD6 ends, control unit 201 controls communicating unit 205, thereby transmitting a third message indicating the points acquired in step SD3, to terminal device 10A (step SD7). Note that the third message may contain not only the points acquired in step SD3 but also the points stored in association with the shop identifier.

If the determination in step SD2 is NO, control unit 201 controls communicating unit 205, thereby transmitting a fourth message indicating that no points can be acquired (step SD8). Also, if the determination in step SD5 is NO, control unit 201 controls communicating unit 205, thereby transmitting a fifth message prompting the user to register the system (step SD9).

After ending the processing in step SC5, control unit 101 waits for a response from server device 20, for a predetermined period of time. If the message transmitted from server device 20 is not received within the predetermined period of time by communicating unit 105 (NO in step SC6), control unit 101 controls display unit 103, thereby displaying a message indicating that points were not acquired (step SC7).

On the other hand, if the message transmitted from server device 20 is received by communicating unit 105, the received message is supplied to control unit 101. After the processing in step SC5, if the message transmitted from server device 20 is received within the predetermined period of time (YES in step SC6), control unit 101 controls display unit 103, thereby displaying a message corresponding to the received message. For example, if the third message is received, control unit 101 controls display unit 103 so as to display the points acquired by reading the bar code. If the fourth message is received, control unit 101 controls display unit 103 so as to display a message indicating that points were not acquired. If the fifth message is received, control unit 101 controls display unit 103 so as to display a message prompting the user to register the system.

As described above, according to this embodiment, if a user performs an operation for reading bar code attached to a product in shop 3 where transmitter 30 is disposed, the user can be provided with points that can be used in the point program service.

Next, an operation example in which the user of terminal device 10 uses the acquired points to purchase a product will be described. The user of terminal device 10A takes a product that he/she wants to purchase, to a place where cash register 40 is disposed in shop 3. When a shop clerk uses cash register 40 to read the bar code attached to the product, cash register 40 displays the price of the product specified by the bar code.

When using the point service, the user of terminal device 10A brings terminal device 10A closer to cash register 40. When terminal device 10A is brought closer to the reader, near field communication is started between cash register 40 and terminal device 10A executing app A. First, control unit 101 controls near field communicating unit 108, thereby transmitting the user identifier stored in storage unit 102 to cash register 40. Upon receiving the user identifier, cash register 40 transmits the shop identifier stored therein and the received user identifier to server device 20.

When communicating unit 205 of server device 20 receives the shop identifier and the user identifier, control unit 201 searches for user table TB3 storing the received user identifier. If there is user table TB3 storing the received user identifier in storage unit 202, control unit 201 specifies the row storing the received shop identifier, in user table TB3 storing the received user identifier, and acquires the points stored in association with the specified row. Control unit 201 controls communicating unit 205, thereby transmitting data indicating the acquired points to cash register 40.

Upon receiving the data transmitted by server device 20, cash register 40 displays the points indicated by the received data. If the user of terminal device 10A asks the shop clerk to use the displayed points, the shop clerk performs the operation that uses cash register 40 to use the displayed points. When this operation is performed, cash register 40 reduces the amount of money corresponding to the points from the displayed price of the product, and displays the obtained amount of money. When the user pays the displayed amount of money and the shop clerk performs checkout operation with cash register 40, cash register 40 transmits a message containing the shop identifier and the user identifier and indicating that the points were used, to server device 20.

Upon receiving the message, server device 20 searches for user table TB3 storing the received user identifier. If there is user table TB3 storing the received user identifier in storage unit 202, control unit 201 specifies the row storing the received shop identifier, in user table TB3 storing the received user identifier, and sets the value of points stored in association with the specified row to 0.

Next, an operation will be described in which, after the user of terminal device 10A left shop 3, a user of terminal device 10B uses terminal device 10B to read the bar code attached to the product purchased by the user of terminal device 10A. In this case, since terminal device 10B executing app A is positioned outside shop 3, signal c cannot be received. If signal c cannot be received, the determination by control unit 101 in step SA2 is NO, and the determination thereby in step SA5 is YES, and, thus, the procedure advances to step SA6 where the value of the in-shop flag is set to 0.

If the value of the in-shop flag is 0 and the user of terminal device 10B uses terminal device 10B to read the bar code attached to the product purchased by the user of terminal device 10A, data of the bar code image is supplied to control unit 101. In this case, since the value of the shop flag is 0, the determination by control unit 101 of terminal device 10B in step SC2 is NO. If the determination by control unit 101 in step SC2 is NO, terminal device 10B displays a message indicating that no points can be acquired outside the shop.

As described above, in this embodiment, the user of terminal device 10 can acquire no points outside shop 3, and can acquire points only inside shop 3, and, thus, the user of terminal device 10 can be attracted to shop 3.

### Modified Example

Although an embodiment of the present invention has been described above, the invention is not limited to the above-described embodiment, and can be implemented by various other forms. For example, the invention may be implemented by the following examples of variations on the embodiment described above. Note that various combinations of the embodiment described above and the variations described below are also applicable.

In the foregoing embodiment, one transmitter 30 is disposed in shop 3, but there is no limitation to this. For example, a configuration may be adopted in which a transmitter 30 is disposed at each of multiple shelves in shop 3. Also, a configuration may be adopted in which the area in shop 3 is divided into multiple areas and a transmitter 30 is disposed in each of the areas.

If multiple transmitters 30 are arranged in shop 3, the transmitters may have different transmitter identifiers. In this case, shop table TB1 stores, in association with the shop identifier, device identifiers of transmitters 30 arranged at the respective shelves (in the respective areas) of the shop with that shop identifier.

With the configuration in which transmitters 30 are arranged at the respective shelves (in the respective areas), when terminal device 10 moves inside shop 3, the transmitter identifier that is received by terminal device 10 changes in accordance with the position to which terminal device 10 has moved. Terminal device 10 transmits the transmitter identifier acquired in shop 3 to server device 20, and server device 20 may change points that are to be given to the user of terminal device 10, according to the transmitter identifier that was transmitted thereto. For example, if the order in which transmitter identifiers are received is a predetermined order, the user may be given points in addition to the points obtained by reading the bar code of the products. Also, if the number of transmitter identifiers received is more than a predetermined number, the user may be given points in addition to the points obtained by reading the bar code of the products.

In the present invention, the points that are to be given to users may be limited. For example, point system 1 may set the limitation that points per product are given to each user only once a day. Furthermore, point system 1 may provide the upper limit of the points that are to be given to each user per day. The upper limit of the points that are to be given to each user per day provided by point system 1 may be different from shop to shop.

In the foregoing embodiment, point system 1 gives points to a user who used terminal device 10 to read bar code, but there is no limitation to this. For example, a configuration may be adopted in which an IC tag storing JAN code is attached to a product, and, when the JAN code stored in the IC tag is acquired by terminal device 10, points are provided.

In the present invention, signal c output by transmitter 30 may contain error correction code. Furthermore, in the foregoing embodiment, a period during which signal *a* is at the H level for one digit of the transmitter identifier and a period during which signal *a* is at the L level for the same have the same length, but may have different lengths.

In the foregoing embodiment, the service provided for the user of terminal device 10 is a point program, but a configuration may be adopted in which coupons are given as the benefits. For example, if terminal device 10 reads bar code attached to a product inside shop 3, server device 20 transmits an image of a coupon that can be used to purchase the product, to terminal device 10. Furthermore, what is provided for users is not limited to coupons or points, and examples thereof may include contents and benefits unique to shop 3.

In the foregoing embodiment, if the length of the period during which signal c output by transmitter 30 is not acquired by the microphone reaches a predetermined period of time, the value of the in-shop flag is set to 0, that is, it is determined that terminal device 10 is positioned outside shop 3, but the configuration for determining whether or not terminal device 10 is positioned outside shop 3 is not limited to this. For example, a global positioning system (GPS) may also be used so that terminal device 10 acquires positional information obtained outside using the GPS, and whether or not terminal device 10 is positioned outside shop 3 may be determined based on this positional information. If the position indicated by the positional information is a position outside shop 3, terminal device 10 sets the value of the in-shop flag to 0.

Also, an access point of a wireless local area network (LAN) may be provided in shop 3, and an identifier (e.g., service set identifier (SSID)) of the access point may be used instead of the transmitter identifier of this embodiment. If terminal device 10 receives the identifier of the access point in shop 3, it is determined that terminal device 10 is positioned inside shop 3, and, if terminal device 10 does not receive the identifier of the access point in shop 3, it is determined that terminal device 10 is positioned outside shop 3.

In the present invention, advertisements may be delivered to terminal device 10 of the user using app A. Furthermore, server device 20 may count the number of users who acquired points after the advertisements were delivered. In well-known POS systems, the number of people who purchased products can be seen. However, what can be seen with the well-known POS systems is only the number of people who purchased products, and the number of people who have visited shops cannot be seen. With this modified example, the number of people who have visited shop 3 in response to the advertisements and have acquired points can be seen, and the number of people who have not purchased products yet but have acquired points and are very likely to purchase the products also can be seen. Furthermore, server device 20 may count the number of terminal devices 10 that transmitted the transmitter identifiers thereto. With this configuration, the number of people who have visited shop 3 in response to the advertisements can be seen, and the number of people who have not purchased products yet also can be seen.

In the present invention, the points that are to be given to the user of terminal device 10 may be changed in accordance with the time from when terminal device 10 is brought into shop 3 to when terminal device 10 reads bar code of a product. For example, the points that are to be given to the user may be reduced as the time from when terminal device 10 is brought into shop 3 to when terminal device 10 reads bar code of a product becomes longer. Alternatively, the points that are to be given to the user may be increased as the time from when terminal device 10 is brought into shop 3 to when terminal device 10 reads bar code of a product becomes longer.

In the foregoing embodiment, if terminal device 10 reads bar code of a product outside shop 3, terminal device 10 displays a message indicating that no points can be acquired outside the shop, but there is no limitation to this. For example, terminal device 10 may display a screen indicating that points can be acquired inside shop 3, thereby prompting a visit to shop 3. Furthermore, if a user who acquired points by using terminal device 10 to read bar code of a product inside shop 3 purchases the product and again uses terminal device 10 to read the bar code of the purchased product outside shop 3, terminal device 10 may display a message prompting the user to purchase the product again in shop 3.

In the foregoing embodiment, if the user of terminal device 10 entered shop 3 but did not use terminal device 10 to read bar code in shop 3, non-acquisition information indicating that the user entered the shop but did not acquire points may be stored.

For example, if a user with the user identifier being "u0001" entered shop 3 with the transmitter identifier being "1001100" and the shop identifier being "S001" but did not use terminal device 10 to read bar code in shop 3, server device 20 stores the non-acquisition information in association with the row storing the shop identifier "S001" in user table TB3.

Furthermore, in this modified example, when user table TB3 stores the non-acquisition information, if the user of terminal device 10 enters another shop 3 that is a sister shop of shop 3 with the shop identifier being "S001" and uses terminal device 10 to read bar code of a product, server device 20 may add points lower than the points that the user was supposed to acquire in shop 3 with the shop identifier being "S001", to the point column in the row storing the shop identifier "S001".

Furthermore, server device 20 may transmit an image of a coupon that can be used in shop 3 with the shop identifier being "S001" to terminal device 10, instead of giving points.

A program for realizing the functions according to the present invention may be provided in a state of being stored on a computer-readable storage medium such as a magnetic storage medium (magnetic tape, magnetic disk (hard disk drive (HDD), flexible disk (FD)), etc.), an optical storage medium (optical disk, etc.), a magneto-optical magnetic storage medium, or a semiconductor memory, and installed on each device. Alternatively, the program may be downloaded via communication network 2 and installed on each device.

## Claims

1. A benefit awarding system, comprising a terminal device and a server device,
the terminal device including:
a first acquiring unit that acquires a product identifier for identifying a product; and
a first transmitting unit that transmits a user identifier indicating a user and the product identifier acquired by the first acquiring unit, in a case where this terminal device is positioned inside a shop; and
the server device including:
a first receiving unit that receives the user identifier and the product identifier transmitted by the terminal device; and
an update unit that updates benefit information stored in a storage unit in association with the user identifier received by the first receiving unit, with information indicating benefits corresponding to the product identifier received by the first receiving unit.

2. The benefit awarding system according to claim 1,
wherein the terminal device includes:
a second acquiring unit that acquires a transmitter identifier output from a transmitter disposed in a shop;
a second transmitting unit that transmits the transmitter identifier acquired by the second acquiring unit;
a second receiving unit that receives a first response transmitted from a device that received the transmitter identifier transmitted by the second transmitting unit; and
a determining unit that determines that this terminal device is positioned inside a shop, in a case where the second receiving unit receives the first response; and
the server device includes:
a third receiving unit that receives the transmitter identifier transmitted by the terminal device; and
a third transmitting unit that transmits the first response to the terminal device, in a case where the transmitter identifier received by the third receiving unit is stored in the storage unit.

3. The benefit awarding system according to claim 2,
wherein the transmitter outputs acoustic waves indicating the transmitter identifier, and
the second acquiring unit analyzes the acoustic waves, thereby acquiring the transmitter identifier.

4. The benefit awarding system according to any one of claims 1 to 3, wherein, in a case where this terminal device is not positioned inside a shop, the first transmitting unit does not transmit the user identifier and the product identifier.

5. The benefit awarding system according to any one of claims 1 to 4, wherein, in a case where this terminal device is not positioned inside a shop, the terminal device displays information prompting a visit when the first acquiring unit acquires the product identifier.

6. A server device, comprising:
a receiving unit that receives a user identifier indicating a user and a product identifier for identifying a product, the identifiers being transmitted when a terminal device is positioned inside a shop; and
an update unit that updates benefit information stored in a storage unit in association with the user identifier received by the receiving unit, with information indicating benefits corresponding to the product identifier received by the receiving unit.

7. A benefit awarding method, comprising:
acquiring, using a terminal device, a product identifier for identifying a product;
transmitting, using the terminal device, a user identifier indicating a user and the acquired product identifier, in a case where this terminal device is positioned inside a shop;
receiving, using a server device, the user identifier and the product identifier transmitted from the terminal device; and
updating, using the server device, benefit information stored in a storage unit in association with the received user identifier, with information indicating benefits corresponding to the received product identifier.
